(19) Europäisches Patentamt
European Patent Office
Office européen des brevets

(11) Publication number: **0 124 985**
**A1**

(12) # EUROPEAN PATENT APPLICATION

(21) Application number: 84301886.2

(22) Date of filing: 20.03.84

(51) Int. Cl.³: **C 07 C 131/00**
A 01 N 37/36, A 01 N 37/34
A 01 N 35/10

(30) Priority: 11.04.83 GB 8309774

(43) Date of publication of application:
14.11.84 Bulletin 84/46

(84) Designated Contracting States:
BE CH DE FR GB IT LI NL SE

(71) Applicant: IMPERIAL CHEMICAL INDUSTRIES PLC
Imperial Chemical House Millbank
London SW1P 3JF(GB)

(72) Inventor: Cartwright, David
1 Stonehaven Drive Woodley
Reading Berkshire(GB)

(74) Representative: Downes, John Edward et al,
Imperial Chemical Industries PLC Legal Department:
Patents Po Box 6
Welwyn Garden City Herts, AL7 1HD(GB)

(54) **Herbicidal diphenyl ether derivatives.**

(57) Diphenyl ether compounds of formula I

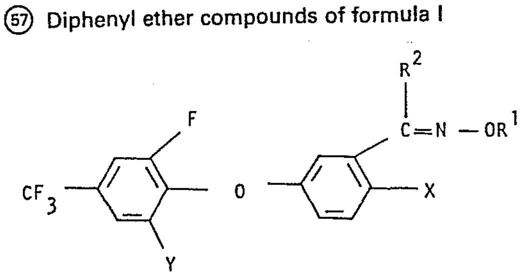

(1)

wherein X is chlorine, bromine, iodine, methyl, $CF_3$ or nitro; Y is fluorine or chlorine; $R^1$ is optionally substituted aliphatic; and $R^2$ is H or an alkyl group. Useful as herbicides.

EP 0 124 985 A1

TITLE MODIFIED
see front page





# HERBICIDAL COMPOUNDS

This invention relates to diphenyl ether compounds useful as herbicides, and to herbicidal compositions and processes utilising them.

According to the present invention, there are provided diphenyl ether compounds of the formula (I)

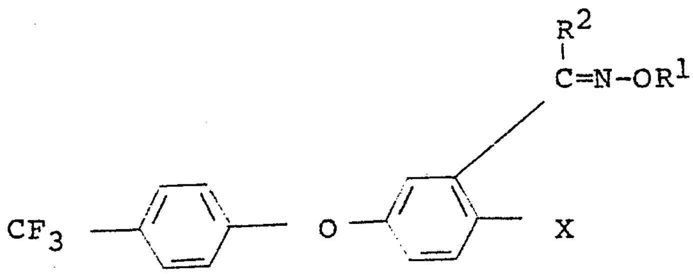

(I)

wherein X is chlorine, bromine, iodine, methyl, $CF_3$ or nitro;

Y is fluorine or chlorine;

$R^1$ is an optionally substituted aliphatic radical having from 1 to 6 carbon atoms which may be unsubstituted or substituted by cyano; a $-CONR^3R^4$ group wherein $R^3$ may be hydrogen, hydroxy, alkoxy of 1 to 4 carbon atoms, or an aliphatic (e.g. alkyl) radical of 1 to 6 carbon atoms, and $R^4$ is hydrogen or an aliphatic radical (e.g. an alkyl radical) of from 1 to 6 carbon atoms; a $-CO_2R^5$ group wherein $R^5$ is an optionally substituted aliphatic or alicyclic radical of from 1 to 10 or more carbon atoms; or a carboxyl group or an agriculturally acceptable salt thereof. and

$R^2$ is hydrogen or an alkyl group of from 1 to 4 carbon atoms.

When $R^1$ is an optionally substituted aliphatic radical it may be for example an optionally substituted alkyl, alkenyl or alkynyl radical of 1 to 6 carbon atoms; it may be, for example, an optionally substituted methyl or ethyl radical.

Examples of substituents which may be present in the group $R^5$ include halogen (i.e. fluorine, chlorine, bromine or iodine), alkoxy (e.g. alkoxy of 1 to 4 carbon atoms) and nitro. When $R^5$ is an aliphatic radical it may be for example an alkyl radical of 1 to 10 or more carbon atoms or an alkenyl or alkynyl radical of 2 to 10 or more carbon atoms. Within these ranges $R^5$ may be for example an alkyl radical of 1 to 4 carbon atoms or an alkenyl radical of 2 to 4 carbon atoms. When $R^5$ is an alicyclic radical it may be for example cyclohexyl.

Particular examples of compounds falling within the scope of the invention are listed in Table 1 below :

| Compound No | X | Y | $R^2$ | $R^1$ |
|---|---|---|---|---|
| 1 | $NO_2$ | Cl | $CH_3$ | $-CH_2CO_2H$ |
| 2 | $NO_2$ | Cl | $CH_3$ | $-CH_2CO_2C_2H_5$ |
| 3 | $NO_2$ | Cl | $CH_3$ | $-CH_2CN$ |
| 4 | $NO_2$ | Cl | $CH_3$ | $-CH(CH_3)CO_2H$ |
| 5 | $NO_2$ | Cl | $CH_3$ | $-CH(CH_3)CO_2C_2H_5$ |
| 6 | $NO_2$ | Cl | $CH_3$ | $-CH(CH_3)CN$ |
| 7 | $NO_2$ | F | $CH_3$ | $-CH_2CO_2H$ |
| 8 | $NO_2$ | F | $CH_3$ | $-CH(CH_3)-CO_2H$ |
| 9 | Cl | Cl | $CH_3$ | $-CH(CH_3)CO_2C_2H_5$ |
| 10 | Cl | F | $CH_3$ | $-CH_2CO_2H$ |
| 11 | $NO_2$ | Cl | H | $-CH_2CO_2H$ |
| 12 | $NO_2$ | Cl | H | $-CH(CH_3)CO_2H$ |
| 13 | $NO_2$ | Cl | H | $-CH(CH_3)CO_2C_{10}H_{2\underline{n}}$ |
| 14 | $NO_2$ | Cl | $CH_3$ | $-CH_3$ |

The compounds of the invention are capable of existing as geometrical isomers (syn and anti isomers) depending upon the orientation of the substituents on the carbon and nitrogen atoms of the -C=N link in the molecule. The invention includes the separate isomers and their mixtures in all proportions.

The compounds may be prepared by a variety of methods. One procedure is outlined in Scheme A below :-

Scheme A

(a) 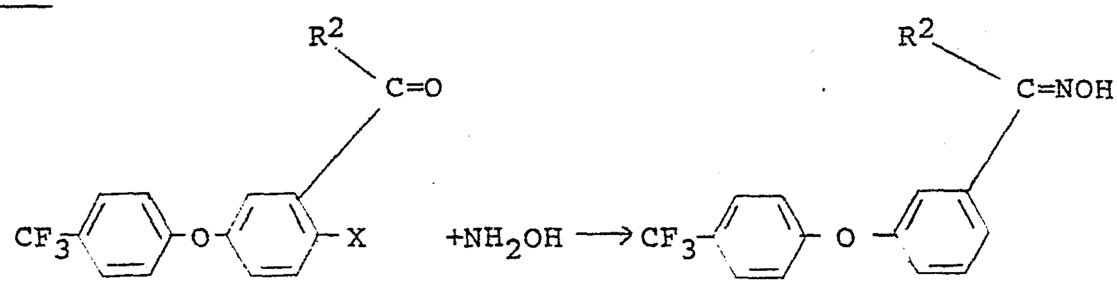


(II) (III)

(b) (III) + $ZR^1$ base (I)

In Scheme A, the symbol Z stands for chlorine, bromine or iodine.

According to Scheme A, a suitably substituted aldehyde or ketone (II, $R^1$ = H or alkyl) is reacted in a solvent or diluent with hydroxylamine to give an oxime derivative (III). Suitable reaction conditions for preparing oximes of aldehydes and ketones of this type are well known in the art, being described for example in columns 9 and 10 of United States Patent 4344789, the disclosure of which is herein incorporated by reference.

In stage (b) of Scheme A, the oxime prepared in stage (a) is reacted with the appropriate halogeno compound $ZR^1$ to obtain the required final product (I). Conveniently the reaction may be carried out with a lower alkanol (e.g. a $C_1$-$C_4$ alkanol) as solvent, and with a metal alkoxide as a base. Thus the oxime (III) may be dissolved in the

alkanol and added to a equimolar amount of the sodium alkoxide in solution in the alkanol. The halogeno compound $ZR^1$ is then added. If reaction is slow at room temperature, the mixture may be heated, for example at reflux. When reaction is sufficiently complete, the product (I) may be isolated by standard methods. Thus the reaction mixture may be evaporated and the residue shaken with water and chloroform, and the chloroform solution dried and evaporated to give the product.

For compounds in which X is halo, nitro, methyl or $CF_3$, the aldehydes and ketones (II) required as starting materials in Scheme A may be prepared by reaction of the appropriate carbonyl substituted metal phenoxide (V) with, for example, a 3,4-difluoro-5-Y-substituted-benzotrifluoride (IV) to give diphenyl ether derivative (VI) as shown below :-

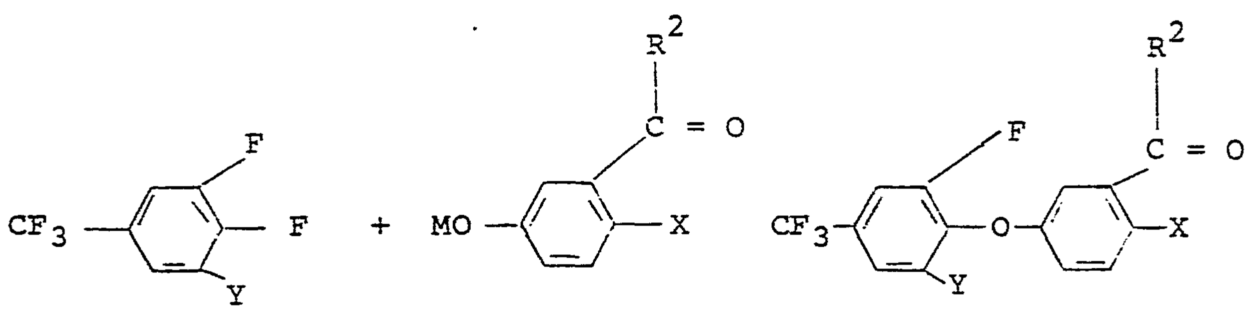

(IV) + (V) (VI)

In the above scheme, the symbol M stands for a metal cation, for example, sodium or potassium. The reaction conditions for preparation of diphenyl ethers by this procedure are well known in the art, being described for example in United States Patent 4344789.

In the case of compounds of formula I where X stands for nitro or chlorine, bromine or iodine the preparation of the intermediate (VI) may also be carried out by reacting a benzotrifluoride (IV) with a phenoxide (V) in which X is hydrogen, so as to obtain an intermediate (VI) in which X is hydrogen; this is then nitrated, or halogenated by standard methods to give the required intermediate (VI) in which X is nitro, chloro, bromo or iodo.

The compounds of the invention are useful as herbicides. In another aspect, therefore, the invention provides a process of inhibiting the growth of unwanted plants, which comprises applying to the plants, or to the locus thereof, a phytotoxic amount of a compound of the formula (I) as hereinbefore defined. The amount of the compound to be applied in the process may vary, depending upon the particular compound chosen, and the identity of the plant species whose growth is to be inhibited, but in general amounts from 0.020 to 10 kilograms per hectare will be suitable; in many cases from 0.25 to 1.0 kilograms per hectare will be appropriate. The skilled worker in the herbicide art will readily be able to establish appropriate application rates by standard procedures without undue experimentation.

The compounds of the invention are effective in controlling a variety of unwanted plants. The compounds may be applied to the above-ground parts of unwanted plants (post-emergence application) or they may be applied to the soil to prevent the growth of plants from seeds present in the soil (pre-emergence application).
The compounds may be used, for example, for the selective control of weeds in crops of soya-bean.

The compounds used in the process of the invention are preferably applied in the form of a composition, in which the active ingredient is mixed with a carrier comprising a solid or liquid diluent. In another aspect, therefore, the invention provides a herbicidal composition, comprising as an active ingredient a compound of the formula (I) as hereinbefore defined, in admixture with a solid or liquid diluent. Preferably the composition also comprises a surface-active agent.

The solid compositions of the invention may be for example, in the form of dusting powders, or may take the form of granules. Suitable solid diluents include, for example, kaolin, bentonite, kieselguhr, dolomite, calcium carbonate, talc, powdered magnesia, and Fuller's earth.

Solid compositions may also be in the form of dispersible powders or grains comprising in addition to the active ingredient, a wetting agent to facilitate the dispersion of the powder or grains in liquids. Such powders or grains may include fillers, suspending agents and the like.

Liquid compositions include aqueous solutions, dispersions and emulsions containing the active ingredient preferably in the presence of one or more surface active agents. Water or organic liquids may be used to prepare solutions, dispersions, or emulsions of the active ingredient. The liquid compositions of the invention may also contain one or more corrosion inhibitors for example lauryl isoquinolinium bromide.

Surface active agents may be of the cationic, anionic or non-ionic type. Suitable agents of the cationic type include for example quaternary ammonium compounds, for example cetyltrimethyl ammonium bromide. Suitable agents of the anionic type include for example soaps, salts of aliphatic mono-esters of sulphuric acid, for example sodium lauryl sulphate; and salts of sulphonated aromatic compounds, for example dodecyl-benzenesulphonate, sodium, calcium and ammonium ligno-sulphonate, butylnaphthalene sulphonate, and a mixture of the sodium salts of diisopropyl- and triisopropyl-naphthalenesulphonic acid. Suitable agents of the non-ionic type include, for example, the condensation products of ethylene oxide with fatty alcohols such as oleyl alcohol and cetyl alcohol, or with alkyl phenols such as octylphenol, nonylphenol, and octylcresol. Other non-ionic agents are the partial esters

derived from long chain fatty acids and hexitol anhydrides, for example sorbitol monolaurate; the condensation products of the said partial esters with ethylene oxide and the lecithins.

The compositions which are to be used in the form of aqueous solutions, dispersions or emulsions are generally supplied in the form of concentrate containing a high proportion of the active ingredient, the concentrate being diluted with water before use. These concentrates are usually required to withstand storage for prolonged periods and after such storage to be capable of dilution with water in order to form aqueous preparations which remain homogeneous for a sufficient time to enable them to be applied by conventional spray equipment.

The compositions of the invention may contain, in addition to carriers and surface-active agents, various other constituents to increase their usefulness. They may contain, for example, buffering salts to maintain the pH of the composition within a desired range; antifreeze agents, for example urea or propylene glycol; adjuvants, for example, oils and humectants; and sequestrants, for example citric acid and ethylenediaminetetracetic acid, which help to prevent the formation of insoluble precipitates when the compositions are diluted with hard water. Aqueous dispersions may contain anti-settling agents and anti-caking agents.

The compositions may in general contain a dye or pigment to impart a characteristic colour. Agents for increasing viscosity may be added to reduce the formation of fine droplets during spraying, and thereby reduce spray drift. Other additives useful for particular purposes will be known to those skilled in the formulation art.

In general concentrates may conveniently contain from 10 to 85% and preferably from 25 to 60% by weight of active ingredient. Dilute preparations ready for use may contain varying amounts of the active ingredient, depending

upon the purpose for which they are to be used; however, dilute preparations suitable for many uses contain between 0.01% and 10% and preferably between 0.1% and 1% by weight of the active ingredient.

The compounds of the invention can be used in association (for example in the form of a mixture) with another herbicide.

Examples of such herbicides are:

A. benzo-2,1,3-thiadiazin-4-one-2,2-dioxides such as 3-isopropylbenzo-2,1,3-thiadiazin-4-one-2,2-dioxide (bentazon);

B. hormone herbicides, particularly the phenoxy alkanoic acids such as 4-chloro-2-methylphenoxy acetic acid (MCPA), 2-(2,4-dichlorophenoxy)propionic acid (dichlorprop), 2,4,5-trichlorophenoxyacetic acid (2,4,5-T), 4-(4-chloro-2-methylphenoxy)butyric acid (MCPB), 2,4-dichlorophenoxyacetic acid (2,4-D), 4-(2,4-dichlorophenoxy)butyric acid (2,4-DB), 2-(4-chloro-2-methylphenoxy)propionic acid (mecoprop), and their derivatives (e.g. salts, esters and amides);

C. 3-[4-(4-halophenoxy)phenyl]-1,1-dialkylureas such as 3-[4-(4-chlorophenoxy)phenyl]-1,1-dimethylurea (chloroxuron);

D. dinitrophenols and their derivatives (e.g. acetates) such as 2-methyl-4,6-dinitrophenol (DNOC), 2-t-butyl-4,6-dinitrophenol (dinoterb), 2-secbutyl-4,6-dinitrophenol (dinoseb) and its ester, dinoseb acetate;

E. dinitroaniline herbicides such as N',N'-diethyl-2,6-dinitro-4-trifluoromethyl-*m*-phenylenediamine (dinitramine), 2,6-dinitro-N,N-dipropyl-4-trifluoromethylaniline (trifluralin) and 4-methysulphonyl-2,6-dinitro-N,N-dipropylaniline (nitralin);

F. phenylurea herbicides such as N'-(3,4-dichlorophenyl)-N,N-dimethylurea (diuron); N,N-dimethyl-N'-[3-(trifluoromethyl)phenyl]urea (flumeturon); N,N-dimethyl-N'-(4-isopropylphenyl)urea (isoproturon); and N'-(3-chloro-4-methylphenyl)-N,N-dimethylurea (chlortoluron).

G. phenylcarbamoyloxyphenylcarbamates such as 3-[methoxycarbonylamino]phenyl (3-methylphenyl)-carbamate (phenmedipham) and 3-[ethoxycarbonylamino]phenyl phenylcarbamate (desmedipham);

H. 2-phenylpyridazin-3-ones such as 5-amino-4-chloro-2-phenylpyridazin-3-one (pyrazon);

I. uracil herbicides such as 3-cyclohexyl-5,6-trimethyleneuracil (lenacil), 5-bromo-3-sec-butyl-6-methyluracil (bromacil) and 3-t-butyl-5-chloro-6-methyluracil terbacil);

J. triazine herbicides such as 2-chloro-4-ethylamino-6-(i-propylamino)-1,3,5-triazine (atrazine), 2-chloro-4,6-di (ethylamino)-1,3,5-triazine (simazine) and 2-azido-4-(i-propylamino)-6-methylthio-1,3,5-triazine (aziprotryne);

K. 1-alkoxy-1-alkyl-3-phenylurea herbicides such as 3-(3,4-dichlorophenyl)-1-methoxy-1-methylurea (linuron), 3-(4-chlorophenyl)-1-methoxy-1-methylurea (monolinuron) and 3-(4-bromo-4-chlorophenyl)-1-methoxy-1-methylurea (chlorobromuron).

L. thiolcarbamate herbicides such as S-propyl dipropylthiocarbamate (vernolate); and S-ethyl-di-isobutyl thiocarbamate (butylate).

M. 1,2,4-triazin-5-one herbicides such as 4-amino-4,5-dihydro-3-methyl-6-phenyl-1,2,4-triazine-5-one (metamitron) and 4-amino-6-t-butyl-4,5-dihydro-3-methylthio-1,3,4-triazin-5-one (metribuzin);

N. benzoic acid herbicides such as 2,3,6-trichlorobenzoic acid (2,3,6-TBA), 3,6-dichloro-2-methoxybenzoic acid (dicamba) and 3-amino-2,5-dichlorobenzoic acid (chloramben);

O. anilide herbicides such as N-butoxymethyl-N-chloro-acetyl 2',6'-diethylacetanilide (butachlor), the corresponding N-methoxy compound (alachlor), the corresponding N-i-propyl compound (propachlor) 3',4'-dichloropropion-anilide (propanil); and 2-chloro-(2-ethyl-6-methyl-phenyl)-N-(2-methoxy-1-methylethyl) acetamide (metolachlor).

P. dihalobenzonitrile herbicides such as 2,6-dichlorobenzonitrile (dichlobenil), 3,5-dibromo-4-hydroxybenzonitrile (bromoxynil) and 3,5-diiodo-4-hydroxybenzonitrile (ioxynil).

Q. haloalkanoic herbicides such as 2,2-dichloropropionic acid (dalapon), trichloroacetic acid (TCA) and salts thereof;

R. diphenylether herbicides such as 4-nitrophenyl 2-nitro-4-trifluoromethylphenyl ether (fluorodifen), methyl 5-(2,4-dichlorophenoxy)-2-nitrobenzoate (bifenox), 2-nitro-5-(2-chloro-4-trifluoromethylphenoxy)benzoic acid and 2-chloro-4-trifluoromethylphenyl 3-ethoxy-4-nitrophenyl ether.

S. miscellaneous herbicides including N,N-dimethyl-diphenylacetamide (diphenamid), N-(1-naphthyl)-phthalamic acid (naptalam) and 3-amino-1,2,4-triazole.

T. bipyridylium herbicides such as those in which the active entity is the 1,1'-dimethyl-4,4'-bipyridylium ion (paraquat) and those in which the active entity is the 1,1'-ethylene-2,2'bipyridylium ion (diquat).

U. Aryloxyphenoxypropionic acids and their derivatives (salts, esters, amides, and the like).

Examples of such acids are:

2-[4-(5-trifluoromethylpyridyl-2-oxy)phenoxy]propionic acid.
2-[4-(3-chloro-5-trifluoromethylpyridyl-2-oxy)phenoxy]-propionic acid.

2-[4-(2,4-dichlorophenoxy)phenoxy]propionic acid.
2-[4-(5- or 6-chlorobenzoxazolyl-2-oxy)phenoxy]-propionic acid
4-methyl-4-(4-trifluoromethylphenoxy)phenoxybut-2-enoic acid.

Where a compound falling within the scope of formula (I) above is capable of existing in optically isomeric forms, the invention includes the separate D and L forms of the compounds as well as mixtures of the D and L forms in all proportions. As normally prepared by chemical synthesis, such optically isomeric compounds will normally be obtained as mixtures of equal proportions of the D and L forms (ie. racemic mixtures). The invention includes mixtures of the separate D and L forms of compounds of formula (I) with the herbicides listed under headings A to U above.

The invention is illustrated by the following Examples in which all parts and percentages are by weight unless otherwise stated.

EXAMPLE 1

This Example illustrates the preparation of 5-(2-chloro-6-fluoro-4-trifluoromethylphenoxy)-2-nitroacetophenone oxime-O-methyl (compound 14 of Table 1).

Crystalline 5-(2-chloro-6-fluoro-4-trifluoromethylphenoxy)-2-nitroacetophenone (1.4g) was dissolved in ethanol (25 ml), and the hydrochloric acid salt of methoxyamine (2.5g) was added followed by sodium acetate (1.5g). The mixture ws stirred at room temperature for 2 hours and then left to stand for two days. The reaction mixture was concentrated under partial vacuum at or below 50°C and the resulting semi solid was partitioned between dichloromethane and water. The organic phase was washed with water, dried and evaporated to give a yellow oil which slowly crystallised to give a solid (1.1g) of melting point just above room temperature. The structure was confirmed as that of compound 14 of Table 1 wherein the ratio of the anti isomer to the syn isomer was 2:1.

EXAMPLES 2 AND 3

These Examples illustrate the preparation of the syn and anti isomers of 5-(2-chloro-6-fluoro-4-trifluoromethylphenoxy)-2-nitroacetophenone oxime-O-(2-propionic acid ethyl ester) (compound 5 of Table 1).

(a) 5-(2-Chloro-6-fluoro-4-trifluoromethylphenoxy)-2-nitroacetophenone (3g) was dissolved/suspended in ethanol (30 ml). Hydroxylamine hydrochloride (4g) and pyridine (4 ml) were added, and the mixture was stirred for 6 hours at 50°C. The reaction mixture was partitioned between water and ether, and the ether phase was washed, dried and

evaporated to give a viscous oil which was shown by thin layer chromatography to contain two products (the syn and anti isomers of the oxime).

(b) The mixed product from stage (a) (1.5g) was applied to preparative thin layer chromatography plates (2mm silica gel) and developed in ether : hexane : acetic acid (60:40:5). The leading band was removed by ethyl acetate to give a yellow oil (A), and the slightly slower band was similarly removed by ethyl acetate to give a yellow gum (B).

(c) Product (A) from stage (b) (1.4g) was dissolved in ethanol (5 ml), and the solution was added dropwise to a solution of sodium (0.2g) in ethanol at room temperature with stirring.

Ethyl-2-bromopropionate (3g) was added dropwise, and the mixture was stirred for 5 hours and then evaporated under reduced pressure to give a brown oil. The oil was added to water and stirred and then extracted out by ethyl acetate. The organic phase was washed and dried and then evaporated to give a brown oil (0.8g) whose structure was confirmed as the anti isomer of compound 5 of Table 1.

(d) Product (B) from stage (b) (0.4g) was similarly dissolved in ethanol (5 ml) and the solution was added dropwise to a solution of sodium (1g) in ethanol. Ethyl-2-bromopropionate (1g) was added dropwise, and the mixture was stirred for 5 hours and then evaporated under reduced pressure togive a brown oil (0.45g) whose structure was confirmed as that of the syn isomer of compound 5 of Table 1.

EXAMPLES 4 TO 6

These Examples illustrate the herbicidal properties of the compounds of Examples 1 to 3. The compounds were submitted to herbicide tests as described below.

The compound was formulated for test by mixing an appropriate amount of it with 5 ml of an emulsion prepared by diluting 160 ml of a solution containing 21.9 grams per litre of Span 80 and 78.2 grams per litre of Tween 20 in methylcyclohexane to 500 ml with water. Span 80 is a Trade Mark for a surface active agent comprising sorbitan monolaurate. Tween 20 is a Trade Mark for a surface active agent comprising a condensate of 20 molar proportions of ethylene oxide with sorbitan monolaurate. The mixture of the compound and the emulsion was then shaken with glass beads and diluted to 40 ml with water. The spray composition so prepared was sprayed onto young pot plants (post-emergence test) of the species named in the Table below, at a rate equivalent to 1000 litres per hectare. Damage to plants was assessed 14 days after spraying by comparison with untreated plants, on a scale of 0 to 5 where 0 to 20% damage and 5 is complete kill. In the table of results, a dash (-) means that no test was made.

A test was also carried out to detect pre-emergence herbicidal activity. Seeds of the test species were placed on the surface of fibre trays of soil and were sprayed with the compositions at the rate of 1000 litres per hectare. The seeds were then covered with further soil. Three weeks after spraying, the seedlings in the sprayed fibre trays were compared with the seedlings in unsprayed control trays, the damage being assessed on the same scale of 0 to 5.

The results of the tests are given in Table II below.

TABLE II

| Compound of Example | Rate of Application (kg/ha) | Pre or Post Emergence | Test Plants Sb | Rp | Ct | Sy | Mz | Ww | Rc | Sn | Ip | Am | Pi | Ca | Ga | Xs | Ab | Co | Av | Dg | Al | St | Ec | Sh | Ag | Cn |
|---|---|---|---|---|---|---|---|---|---|---|---|---|---|---|---|---|---|---|---|---|---|---|---|---|---|---|
| 1 | 0.2 | Pre | 3 | 1 | 2 | 1 | 1 | 3 | 3 | 5 | 2 | 5 | 5 | 5 | – | 4 | 3 | 5 | 3 | 4 | 2 | 1 | 0 | 0 | 3 | – |
| | 0.1 | Post | 3 | – | 4 | 2 | 3 | 2 | 3 | 5 | 5 | 5 | – | 5 | 5 | 3 | 5 | 4 | 2 | 2 | 2 | 2 | 4 | 3 | 0 | 1 |
| 2 (anti isomer) | 0.2 | Pre | 3 | 5 | 2 | 1 | 2 | 1 | 3 | 5 | 3 | 5 | 5 | 5 | – | 4 | 5 | 3 | 2 | 3 | 2 | 0 | 0 | 1 | 0 | – |
| | 0.1 | Post | 3 | – | 4 | 3 | 4 | 4 | 4 | 5 | 5 | 5 | – | 5 | 5 | 4 | 5 | 4 | 4 | 3 | 3 | 3 | 5 | 3 | 2 | 1 |
| 3 (syn isomer) | 0.2 | Pre | 5 | 5 | 2 | 1 | 1 | 2 | 2 | 5 | 2 | 5 | 5 | 5 | – | 4 | 5 | 5 | 2 | 4 | 2 | 1 | 0 | 1 | 3 | – |
| | 0.1 | Post | 2 | – | 5 | 3 | 4 | 2 | 3 | 5 | 5 | 5 | – | 5 | 5 | 4 | 5 | 4 | 3 | 2 | 3 | 3 | 3 | 3 | 1 | 1 |
| | 0.025 | Post | 2 | – | 4 | 3 | 1 | 2 | 3 | 5 | 3 | 4 | – | – | 4 | 4 | 5 | 4 | 2 | 2 | 2 | 1 | 3 | 2 | 0 | 1 |

Names of test plants in Table II

| | |
|---|---|
| Sb | Sugar beet |
| Rp | Rape |
| Ct | Cotton |
| Sy | Soya bean |
| Mz | Maize |
| Ww | Winter wheat |
| Rc | Rice |
| Sn | Senecio vulgaris |
| Ip | Ipomoea purpurea |
| Am | Amaranthus retroflexus |
| Pi | Polygonum aviculare |
| Ca | Chenopodium album |
| Ga | Galium aparine |
| Xs | Xanthium spinosum |
| Ab | Abutilon theophrastii |
| Co | Cassia obtusifolia |
| Ot/Av | Oats (cultivated in pre-emergence test and Avena fatua (wild oats) in post-emergence test. |
| Dg | Digitaria sanguinalis |
| Al | Alopecurus myosuroides |
| St | Setaria viridis |
| Ec | Echinocloa crus-galli |
| Sh | Sorghum halepense |
| Ag | Agropyron repens |
| Cn | Cyperus rotundus |

MJR/JLW/jlw
PP 32674
9 March 84

1. Diphenyl ether compounds of the formula (I)

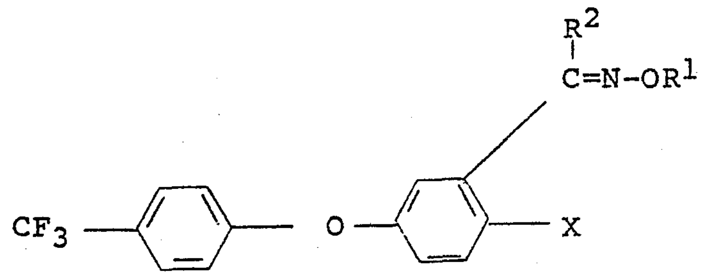

(I)

wherein X is chlorine, bromine, iodine, methyl, $CF_3$ or nitro;

Y is fluorine or chlorine;

$R^1$ is an aliphatic radical having from 1 to 6 carbon atoms which may be unsubstituted or substituted by cyano; a $-CONR^3R^4$ group wherein $R^3$ may be hydrogen, hydroxy, alkoxy of 1 to 4 carbon atoms, or an alkyl radical of 1 to 6 carbon atoms, and $R^4$ is hydrogen or an alkyl radical of from 1 to 6 carbon atoms; a $-CO_2R^5$ group wherein $R^5$ is an optionally substituted aliphatic or alicyclic radical of from 1 to 10 or more carbon atoms; or a carboxyl group or an agriculturally acceptable salt thereof.

2. A compound according to claim 1 wherein X is a halogen atom or a nitro group, Y is chlorine, $R^2$ is hydrogen or an alkyl group of from 1 to 4 carbon atoms and $R^1$ is an alkyl group having from 1 to 6 carbon atoms.

3. A compound according to claim 1 wherein X is a halogen atom or a nitro group, Y is chlorine, $R^2$ is hydrogen or an alkyl group of from 1 to 4 carbon atoms and $R^1$

is an alkyl group having from 1 to 6 carbon atoms having as substituent a group $-COOR^5$ wherein $R^5$ is an alkyl group containing from 1 to 10 carbon atoms or wherein $R^1$ is a carboxyl group or an agriculturally acceptable salt thereof.

4. A compound according to claim 2 wherein $R^1$ is a substituted methyl or ethyl radical.

5. A process of inhibiting the growth of unwanted plants, which comprises applying to the plants, or to the locus thereof, a phytotoxic amount of a compound as claimed in any of the preceding claims.

6. A process of preparing a compound of the formula (I) defined in claim 1, which comprises the steps of :
(a) reacting a compound of formula (II) :

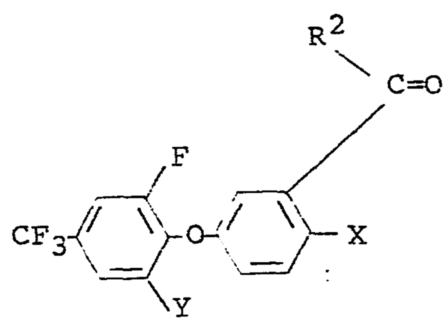

(II)

with a hydroxylamine to give the oxime derivative (III)

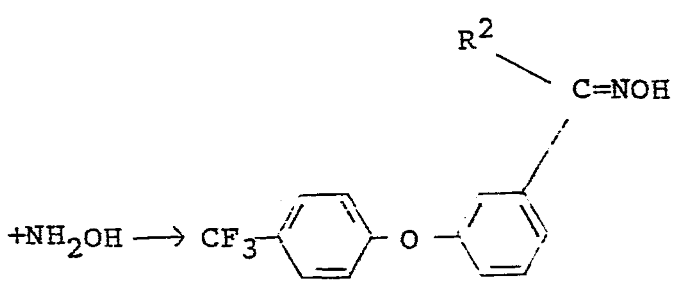


(III)

and
(b) reacting the compound of formula (III) with a halogeno compound $ZR^1$ and recovering the product (I).

7. Herbicidal compositions, comprising as an active ingredient a compound according to any of claim 1 to 4 in admixture with a carrier comprising a solid or liquid diluent.

MJR/JED/jlw
PP 32674
8 Mar 84

European Patent Office

# EUROPEAN SEARCH REPORT

0124985

Application number

EP 84 30 1886

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 049 695 (PPG INDUSTRIES) * Whole document * | 1-7 | C 07 C 131/00<br>A 01 N 37/36<br>A 01 N 37/34<br>A 01 N 35/10 |
| | --- | | |
| X | US-A-4 263 227 (KRASS) * Whole document * | 1-7 | |
| | ----- | | |
| | | | TECHNICAL FIELDS SEARCHED (Int. Cl. ³) |
| | | | C 07 C 131/00 |

The present search report has been drawn up for all claims

| Place of search | Date of completion of the search | Examiner |
|---|---|---|
| THE HAGUE | 19-07-1984 | GAUTIER R.H.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82